# NEUE EUROPÄISCHE PATENTSCHRIFT

(11) **EP 2 918 180 B2**
(45) Veröffentlichungstag und Bekanntmachung des Hinweises auf die Entscheidung über den Einspruch: **30.04.2025**
(45) Hinweis auf die Patenterteilung: 04.04.2018
(21) Anmeldenummer: 15154819.5
(22) Anmeldetag: 12.02.2015
(51) Int. Cl.: A24C 5/34, G01N 21/88, G01N 21/952

(54) **Optische Prüfung von stabförmigen Artikeln der Tabak verarbeitenden Industrie**
Optical inspection of rod-shaped articles from the tobacco processing industry
Contrôle optique d'articles en forme de tige de l'industrie de traitement du tabac

(30) Priorität: 21.02.2014 DE 102014203158
(43) Veröffentlichungstag der Anmeldung: 16.09.2015
(73) Patentinhaber: Körber Technologies GmbH, 21033 Hamburg (DE)
(72) Erfinder: El Jarad, Akram, 21423 Winsen (DE); Drews, Ingo, 21509 Glinde (DE); Gast, Hanno, 21256 Handeloh (DE)
(74) Vertreter: Seemann & Partner Patentanwälte mbB

(56) Entgegenhaltungen:
- EP-A1- 0 937 978
- EP-A1- 1 430 796
- EP-A2- 0 570 163
- EP-A2- 0 570 163
- EP-B1- 0 812 548
- DE-A1- 10 245 559
- DE-A1- 102004 040 912
- US-A1- 2005 185 181
- US-A1- 2005 185 181

## Beschreibung

Die Erfindung betrifft eine Bildaufnahmevorrichtung zur optischen Prüfung von stabförmigen Artikeln der Tabak verarbeitenden Industrie umfassend eine Kamera, wobei die Kamera eingerichtet ist, wenigstens zwei Abbildungen jeweils wenigstens eines stabförmigen Artikels oder jeweils wenigstens eine Abbildung von jeweils wenigstens zwei stabförmigen Artikeln gleichzeitig aufzunehmen, wobei für jede Abbildung jeweils ein Strahlengang von dem jeweiligen stabförmigen Artikel zu der Kamera über wenigstens eine erste reflektierende optische Vorrichtung vorgesehen ist. Die Erfindung betrifft ferner ein Verfahren zum optischen Prüfen von stabförmigen Artikeln der Tabak verarbeitenden Industrie, wobei mittels einer Kamera wenigstens zwei Abbildungen jeweils wenigstens eines stabförmigen Artikels oder jeweils wenigstens zwei stabförmige Artikel gleichzeitig aufgenommen werden, wobei für jede Abbildung Strahlen über einen Strahlengang von dem wenigstens einen stabförmigen Artikel über eine erste reflektierende optische Vorrichtung zur Kamera reflektiert werden.

Stabförmige Artikel der Tabak verarbeitenden Industrie, insbesondere Filterzigaretten, können mittels einer Prüfeinrichtung auf einem Förderorgan geprüft werden. Dieses geschieht vorzugsweise beim insbesondere queraxialen Fördern der Artikel mittels einer am Förderorgan vorgesehenen Prüfeinrichtung. Die Prüfeinrichtung umfasst hierbei beispielsweise eine Bildaufnahmevorrichtung und eine hieran angeschlossene Auswerteeinrichtung. Die Auswerteeinrichtung weist beispielsweise einen Computer auf, auf dem eine Bildverarbeitung durchgeführt wird.

Ferner ist eine Anordnung zum Prüfen von stabförmigen Artikeln der Tabak verarbeitenden Industrie, insbesondere Filterzigaretten, mit einem Förderorgan zum, vorzugsweise queraxialen, Fördern der stabförmigen Artikel und mit einer an dem Förderorgan vorgesehenen Prüfeinrichtung zum Prüfen der auf dem Förderorgan geförderten stabförmigen Artikel vorgesehen. Außerdem betrifft die Erfindung eine Maschine der Tabak verarbeitenden Industrie, insbesondere Filteransetzmaschine.

Unter der Bezeichnung "MAX" ist eine Filteransetzmaschine der Patentanmelderin bekannt.

Als Filteransetzmaschine wird eine Vorrichtung bzw. Maschine zur Herstellung von Filterzigaretten verstanden mit Mitteln zur Aufnahme von Tabakstöcken doppelter Länge mit Mitteln zum Schneiden dieser doppeltlangen Tabakstöcke in Tabakstöcke einfacher Länge, mit Mitteln zum Einbringen von Filterstopfen doppelter Länge zwischen die Tabakstöcke einfacher Länge, mit Mitteln zum Verbinden des doppeltlangen Filterstopfens mit den beiden Tabakstöcken einfacher Länge durch Umhüllen mit einem Belagpapierblättchen, das mittels einer Schneideinrichtung von einem zugeführten Belagpapierstreifen abgetrennt wird, mit Mitteln zum nachfolgenden Ausführen eines Trennschnitts durch den doppeltlangen Filterstopfen, so dass Filterzigaretten normaler Gebrauchslänge entstehen.

Nach der Herstellung der Filterzigaretten werden eine Dichtigkeitsprüfung und/oder mindestens eine Kopfendenprüfung und/oder eine Ventilationsgrad-Prüfung und/oder mindestens eine optische Prüfung der Zigaretten in der Filteransetzmaschine ausgeführt. Bei der Dichtigkeitsprüfung wird auf einer Prüftrommel jede einzelne Zigarette mit Prüfluft beaufschlagt. Weicht der gemessene Druck dabei von einem Sollwert ab, ist die betreffende Zigarette fehlerhaft und wird ausgeworfen. Bei der Kopfendenprüfung prüft ein beispielsweise kapazitiver Messwertaufnehmer die Tabakdichte in den Kopfenden der Zigaretten. Bei der Ventilationsgrad-Prüfung werden die Zigaretten mit Prüfluft beaufschlagt. Das gemessene Druckverhältnis Ausgang/Eingang verhält sich proportional zum Ventilationsgrad der Zigarette.

Darüber hinaus werden an einer Filteransetzmaschine die Produkte bzw. hergestellten stabförmigen Artikel bzw. Filterzigaretten durch optische Prüfeinrichtungen untersucht. Bei einer optischen Prüfung werden üblicherweise Qualitätsmerkmale an den Produkten der Tabak verarbeitenden Industrie detektiert wie Löcher, Dimensionen, Objektidentifizierung, Stempel, Leimauftrag, Flecken, das Vorhandensein von Filterelementen, Beschädigung und dergleichen. Unter Produkten der Tabak verarbeitenden Industrie werden im Rahmen der vorliegenden Patentanmeldung insbesondere stabförmige Artikel bzw. Objekte wie Zigaretten, Filterstäbe, Multisegmentfilterstäbe und dergleichen verstanden.

Zur optischen Kontrolle werden üblicherweise Zeilen- oder Matrixkameras eingesetzt, die wegen der Anforderungen an die Abbildungs- und Aufnahmequalität mit aufwändigen, großen Objektiven ausgestattet sind. Um z.B. die gesamte Zigarettenlänge ohne Verzerrung und Beeinträchtigung der Schärfe zu betrachten, ist ein großer Abstand des Messobjektes zur Kamera notwendig. Es kommt an einigen Stellen an der Maschine der Tabak verarbeitenden Industrie, beispielsweise einer Filteransetzmaschine, vor, dass der optische Weg mit Spiegeln mehrfach gefaltet werden muss.

Die Beleuchtung der Messobjekte bzw. der stabförmigen Produkte der Tabak verarbeitenden Industrie wird mit separaten Lichtquellen realisiert, die wegen des großen Abstandes zum Objekt hohe Lichtstärken besitzen müssen. Es ist unter anderem auch bekannt, das Licht unter Intensitätsverlust mit Lichtleitkabeln an das Messobjekt heranzuführen. Dadurch dass in der staubigen Umgebung einer Maschine der Tabak verarbeitenden Industrie herumfliegende Partikel, wie z.B. Tabakstaub, Tabakkrümel, Papierstückchen, die optische Kontrolle stören und es zu Fehlbewertungen kommt, kann es wegen des großen Abstandes der verwendeten Kontrolleinrichtungen bzw. Prüfeinrichtungen nur durch aufwändige Maßnahmen reduziert werden.

Beispielsweise ist aus DE 10 2004 040 912 A1 eine Einrichtung zur optischen Kontrolle von Produkten der Tabak verarbeitenden Industrie bekannt, die eine Bilderfassungsvorrichtung umfasst, wobei Gradientenindexlinsen verwendet werden, um den Abstand zwischen der Bilderfassungsvorrichtung und den zu kontrollierenden Produkten zu verringern.

Weiterhin offenbart EP 0 812 548 B1 eine Vorrichtung zur Überwachung der äußeren Unversehrtheit von Zigaretten, die an einer Mehrzahl von Matrixkameras queraxial auf einer Fördertrommel vorbeigefördert werden und auf dem Förderweg um ihre Längsachse rotiert werden.

DE 39 17 321 A1 offenbart ein Verfahren zur elektrooptischen Prüfung von Zigaretten, wobei die Zigaretten längs einer von zwei gegenläufigen Förderwalzen bestimmten Bahn gefördert werden. Es werden freiliegende Oberflächenhälften einer jeden Zigarette durch eine elektrooptische Einheit, wie beispielsweise eine Fernsehkamera, bei ihrem Lauf über jede Förderwalze geprüft, während die Stirnseite der Zigarette durch wenigstens eine weitere elektrooptische Einheit geprüft wird.

Die in DE 39 17 321 A1 vorgesehene weitere elektrooptische Einheit zum Prüfen, insbesondere der Stirnseiten der Zigarette, ist relativ großbauend und kann nicht an jeder Stelle einer Maschine der Tabak verarbeitenden Industrie, beispielsweise einer Filteransetzmaschine, eingesetzt werden.

In US 2005/0185181 A1 ist eine Vorrichtung zur optischen Kontrolle einer elektronischen Komponente offenbart. Dabei wird die elektronische Komponente mittels einer einzelnen Kamera von mehreren Seiten untersucht, indem Prismen mit unterschiedlichen Brechungsindizes eingesetzt werden.

Eine weitere Vorrichtung zur optischen Kontrolle von Zigaretten ist in EP 0 570 163 A2 offenbart. Dabei nehmen zwei Kameras jeweils zwei Bilder der Mantelflächen der Zigaretten auf, so dass die gesamte Mantelfläche betrachtet werden kann.

DE 102 45 559 A1 offenbart eine Kamera mit einer Zwischenabbildungsoptik, bei der zur Erzeugung der Zwischenabbildung ein konvexer und ein konkaver Spiegel verwendet wird.

In EP 1 430 796 A1 ist eine Vorrichtung zur optischen Überprüfung von Zigaretten offenbart, bei der auf einem Hauptpfad und zwei Bypasspfaden jeweils eine Abbildung der Mantelflächen der Zigaretten aufgenommen wird.

Es ist Aufgabe der vorliegenden Erfindung, eine Maschine der Tabak verarbeitenden Industrie mit wenigstens einer Bildaufnahmevorrichtung zur optischen Prüfung von stabförmigen Artikeln der Tabak verarbeitenden Industrie und ein entsprechendes Verfahren zum optischen Prüfen von stabförmigen Artikeln der Tabak verarbeitenden Industrie anzugeben, die bei einer kleinbauenden Bildaufnahmevorrichtung eine genaue und effiziente Bilderfassung von stabförmigen Artikeln der Tabak verarbeitenden Industrie ermöglicht.

Gelöst wird diese Aufgabe durch eine Maschine nach Anspruch 1. Erfindungsgemäß umfasst die Maschine wenigstens eine Bildaufnahmevorrichtung zur optischen Prüfung von stabförmigen Artikeln der Tabak verarbeitenden Industrie umfassend eine Kamera, wobei die Kamera eingerichtet ist, wenigstens zwei Abbildungen jeweils wenigstens eines stabförmigen Artikels oder jeweils wenigstens eine Abbildung von jeweils wenigstens zwei stabförmigen Artikeln gleichzeitig aufzunehmen, wobei für jede Abbildung jeweils ein Strahlengang von dem jeweiligen stabförmigen Artikel zu der Kamera über wenigstens eine erste reflektierende optische Vorrichtung vorgesehen ist, die dadurch weitergebildet ist, dass jeder Strahlengang eine Weglänge hat, wobei die Weglänge wenigstens eines ersten Strahlengangs durch eine Weglängenanpassungsvorrichtung an die Weglänge eines zweiten Strahlengangs angepasst wird oder ist.

Durch die erfindungsgemäße Lösung können sehr effizient Weglängen der Strahlengänge so angepasst werden, dass mehrere Abbildungen auch bei unterschiedlichen Abständen zu der Kamera scharf abgebildet werden können. Hierbei ist es beispielsweise möglich, von den gleichen Objekten bzw. den gleichen Stellen auf dem jeweiligen stabförmigen Artikel unterschiedlich Schärfentiefen einzustellen, um so in verschiedenen Tiefen des stabförmigen Artikels bspw. an einer Stirnseite eines Tabakstocks oder an der Stirnseite eines Filters scharfe Abbildungen zu ermöglichen.

Erfindungsgemäß ist durch die Weglängenanpassungsvorrichtung eine variable Einstellung der Weglängen bei unterschiedlich langen stabförmigen Artikeln ermöglicht.

Besonders bevorzugt ist eine Ausführungsform, bei der die Weglängenanpassungsvorrichtung derart eingerichtet ist, eine erste Gegenstandsweite des ersten Strahlengangs so groß einzustellen wie eine zweite Gegenstandsweite des zweiten Strahlengangs. Hierdurch können verschieden weit von der Kamera entfernte Objekte bzw. Flächen oder Seiten des wenigstens einen stabförmigen Artikels oder der stabförmigen Artikel gleichzeitig scharf auf der Kamera abgebildet werden.

Im Rahmen dieser Erfindung umfasst die Kamera vorzugsweise einen lichtsensitiven Bildsensor beispielsweise vom Typ CMV4000 oder CMV2000 der Firma CMOSIS NV, Antwerpen, Belgien. Vorzugsweise umfasst die Kamera ein Objektiv. Mittels der Kamera ist beispielsweise eine Schärfentiefe von 1 bis 2 mm realisierbar.

Wenn vorzugsweise die Weglängenanpassungsvorrichtung eine zweite reflektierende optische Vorrichtung, insbesondere ein Prisma, umfasst, dessen Abstand zu dem stabförmigen Artikel, von dem über die zweite reflektierende optische Vorrichtung eine Abbildung aufgenommen wird oder ist, veränderbar ist, ist eine besonders kostengünstige Bildaufnahmevorrichtung möglich.

Eine nicht zur Erfindung gehörende Weglängenanpassungsvorrichtung umfasst ein abbildendes Linsensystem, insbesondere ein Objektiv, das eine reelle Zwischenabbildung wenigstens eines stabförmigen Artikels erzeugt. Hierdurch können auch sehr große Weglängenunterschiede effizient und mit geringen Bildfehlern kompensiert werden. Dabei ist oder wird die reelle Zwischenabbildung auf der Höhe der ersten Gegenstandsweite erzeugt. Als Beispiel ist der Abstand der reellen Zwischenabbildung zum Objektiv, insbesondere einem optischen Mittelpunkt der Linsen des Objektivs, gleich der ersten Gegenstandsweite.

Vorzugsweise ist zumindest ein Teil des Strahlengangs eingekapselt. Hierdurch wird vermieden, dass Verunreinigungen in der Luft, wie Fussel oder Staub, die Abbildung verschlechtern.

Vorzugsweise ist zur Aufnahme von zwei Stirnseiten eines stabförmigen Artikels, insbesondere zu jeder Stirnseite gegenüberliegend, wenigstens eine erste oder eine zweite reflektierende optische Vorrichtung, insbesondere wenigstens ein Prisma und/oder eine Spiegelanordnung, vorgesehen. Hierdurch ist eine besonders Platz sparende Bildaufnahmevorrichtung möglich, die insbesondere in beengten Räumen einer Maschine der Tabak verarbeitenden Industrie verbaut werden kann. Hierzu sind die reflektierenden optischen Vorrichtungen, vorzugsweise queraxial zu einer optischen Achse der Kamera linear fluchtend angeordnet.

Vorzugsweise ist zur Anpassung an die Länge des stabförmigen Artikels wenigstens eine der zweiten reflektierenden optischen Vorrichtungen quer zur optischen Achse der Kamera, insbesondere quer zur Förderrichtung bzw. in Richtung einer Längsachse der stabförmigen Artikel verschiebbar.

Wenn vorzugsweise die wenigstens eine erste reflektierende optische Vorrichtung, insbesondere wenigstens ein Prisma und/oder eine Spiegelanordnung, Strahlen des ersten und des zweiten Strahlengangs in Richtung der Kamera reflektiert, ist eine kompakte und genaue Abbildungen ermöglichende Bildaufnahmevorrichtung realisierbar.

Hierbei reflektiert vorzugsweise die wenigstens eine erste reflektierende optische Vorrichtung im Wesentlichen parallele Strahlen zur Kamera.

Eine effiziente Trennung der Abbildungen bzw. aufzunehmenden Objekte ist vorzugsweise dann gegeben, wenn das Verhältnis des Abstandes einer ersten oder einer zweiten reflektierenden optischen Vorrichtung zu dem Abstand der ersten oder der zweiten reflektierenden optischen Vorrichtung zum stabförmigen Artikel von 1:1 bis wenigstens 20:1 ist, vorzugsweise liegt das Verhältnis zwischen 5:1 und 20:1. Hierbei kann dann auch eine telezentrische Optik vermieden werden, wodurch die Bildaufnahmevorrichtung Kosten effizient realisierbar ist.

Vorzugsweise liegt im Wesentlichen ein rechter Winkel zwischen einem auf die erste oder zweite reflektierende optische Vorrichtung einfallenden und einem von der ersten oder zweiten reflektierenden Vorrichtung reflektierten Strahl vor.

In einer alternativen Ausgestaltung kann die reflektierende optische Vorrichtung auch zwei 45° Umlenkungen aufweisen.

In einer weiteren alternativen Ausgestaltung können auch von 90° abweichende Winkel realisiert sein, beispielsweise 30° oder 60°, nämlich an die baulichen, geometrischen Bedingungen angepasst.

Vorzugsweise ist ein erster Teil einer ersten oder einer zweiten reflektierenden optischen Vorrichtung verspiegelt ausgebildet und ein zweiter Teil der ersten oder zweiten reflektierenden optischen Vorrichtung unverspiegelt ausgebildet. Hierdurch können einige Strahlen reflektiert werden und andere Strahlen unreflektiert durch die reflektierende Vorrichtung hindurch gelangen.

Vorzugsweise ist wenigstens ein Teil der Komponenten der Bildaufnahmevorrichtung und/oder wenigstens ein Teil der Strahlengänge spiegelsymmetrisch zu einer optischen Achse der Kamera. Hierdurch ist eine sehr präzise und nur wenige Justageschritte benötigende Bildaufnahmevorrichtung möglich.

Vorzugsweise sind die Strahlengänge zumindest abschnittsweise, vorzugsweise nahezu vollständig, gekapselt, wobei die Strahlengänge zwischen den optischen Vorrichtungen und dem Objektiv der Kamera insbesondere durch Rohre verlaufen.

Erfindungsgemäß ist eine Maschine der Tabak verarbeitenden Industrie mit wenigstens einer Bildaufnahmevorrichtung, die oben beschrieben ist, versehen.

Die Aufgabe wird ferner durch ein Verfahren gemäß dem nebengeordneten Verfahrensanspruch gelöst. Erfindungsgemäß werden zum optischen Prüfen von stabförmigen Artikeln der Tabak verarbeitenden Industrie mittels einer Kamera wenigstens zwei Abbildungen jeweils wenigstens eines stabförmigen Artikels oder jeweils wenigstens zwei stabförmige Artikel gleichzeitig aufgenommen wobei für jede Abbildung Strahlen über einen Strahlengang von dem wenigstens einen stabförmigen Artikel über eine erste reflektierende optische Vorrichtung zur Kamera reflektiert werden, wobei die Strahlen eine Weglänge haben, wobei die Weglänge wenigstens eines ersten Strahlengangs durch eine Weglängenanpassungsvorrichtung an die Weglänge eines zweiten Strahlengangs angepasst wird oder ist, wobei
durch die Weglängenanpassungsvorrichtung eine variable Einstellung der Weglängen bei unterschiedlich langen stabförmigen Artikeln ermöglicht ist.

Vorzugsweise ist die Weglängenanpassungsvorrichtung derart eingerichtet, eine erste Gegenstandsweite des ersten Strahlengangs so groß einzustellen wie eine zweite Gegenstandsweite des zweiten Strahlengangs.

Vorzugsweise umfasst die Weglängenanpassungsvorrichtung eine zweite reflektierende optische Vorrichtung, insbesondere ein Prisma oder eine Spiegelanordnung, dessen Abstand zu dem stabförmigen Artikel, von dem über die zweite reflektierende optische Vorrichtung eine Abbildung aufgenommen wird oder ist, veränderbar ist.

Eine nicht zur Erfindung gehörende Weglängenanpassungsvorrichtung umfasst ein abbildendes Linsensystem, insbesondere Objektiv, das eine reelle Zwischenabbildung wenigstens eines stabförmigen Artikels erzeugt.

Beispielsweise ist oder wird eine reelle Zwischenabbildung auf der Höhe der ersten Gegenstandsweite erzeugt. Beispielsweise ist der Abstand der reellen Zwischenabbildung zum Objektiv der Kamera bzw. zu einem optischen Mittelpunkt des Linsensystems des Objektivs der Kamera gleich der ersten Gegenstandsweite.

Vorzugsweise werden zwei Stirnseiten eines stabförmigen Artikels aufgenommen.

Vorzugsweise wird zur Anpassung an die Länge des stabförmigen Artikels wenigstens eine der zweiten reflektierenden optischen Vorrichtungen quer zur optischen Achse der Kamera oder quer zur Förderrichtung oder in Richtung einer Längsachse einer Mulde zur Aufnahme eines stabförmigen Artikels verschoben.

Vorzugsweise reflektiert die wenigstens eine erste reflektierende optische Vorrichtung, insbesondere wenigstens ein Prisma oder eine Spiegelanordnung, Strahlen des ersten und des zweiten Strahlengangs in Richtung der Kamera.

Vorzugsweise reflektiert eine erste reflektierende optische Vorrichtung im Wesentlichen parallele Strahlen zur Kamera.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Figur 1: schematisch einen Abschnitt einer Filteransetzmaschine in einer Vorderansicht,
- Figur 2: eine schematische Draufsicht auf die Filteransetzmaschine aus Figur 1, wobei einige Elemente, der besseren Veranschaulichung wegen, weggelassen wurden,
- Figur 3: eine schematische Draufsicht auf eine erfindungsgemäße Bildaufnahmevorrichtung in einer ersten Ausführungsform,
- Figur 4: eine schematische Draufsicht auf eine nicht zur Erfindung gehörenden Bildaufnahmevorrichtung in einer zweiten nicht zur Erfindung gehörenden Ausführungsform,
- Figur 5: eine schematische Draufsicht auf eine erfindungsgemäße Bildaufnahmevorrichtung in einer dritten Ausführungsform,
- Figur 6: eine schematische Draufsicht auf eine erfindungsgemäße Bildaufnahmevorrichtung in einer vierten Ausführungsform und
- Figur 7: eine schematische Draufsicht auf eine erfindungsgemäße Bildaufnahmevorrichtung in einer fünften Ausführungsform.

In den Zeichnungen sind jeweils gleiche oder gleichartige Elemente und/oder Teile mit denselben Bezugsziffern versehen, so dass von einer erneuten Vorstellung jeweils abgesehen wird.

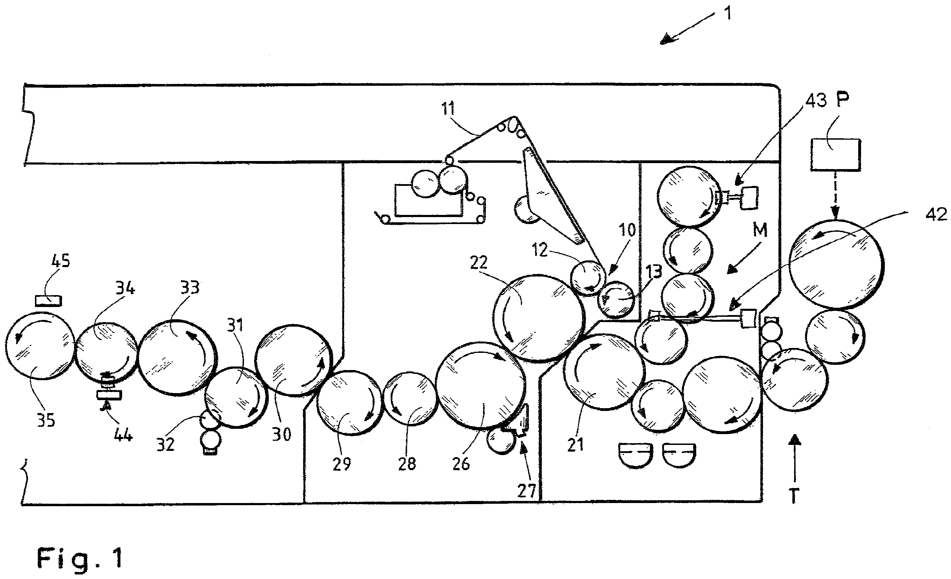

In Fig. 1 ist eine Filteransetzmaschine in einer Vorderansicht ausschnittsweise dargestellt, wobei die Filteransetzmaschine über eine Trommelanordnung T zur Zuführung von Tabakstöcken von einer schematisch eingezeichneten Zigarettenstrangmaschine P Tabakstöcke doppelter Gebrauchslänge empfängt. Eine Zigarettenstrangmaschine ist unter der Bezeichnung "PROTOS" der Patentanmelderin bekannt.

Auf ihrem Förderweg zu einer Zusammenstelltrommel 21 werden die Tabakstöcke 82 doppelter Gebrauchslänge geschnitten und längsaxial gespreizt. Auf der Zusammenstelltrommel 21 werden über eine weitere Trommelanordnung M doppeltlange Filterstopfen 85 transportiert, die jeweils zwischen zwei längsaxial beabstandete Tabakstöcke eingefügt werden. Hierdurch wird auf der Zusammenstelltrommel 21 eine Folge von queraxial hintereinander angeordneten Tabakstock-Filterstopfen-Tabakstock-Gruppen gebildet. Die zusammengestellten Artikelgruppen werden von der Zusammenstelltrommel 21 an eine Fördertrommel 22 übergeben.

Ein beleimter und geförderter Belagpapierstreifen 11 wird in einem Belagapparat 10 auf einer Schneidtrommel 12 von den Messern einer Messertrommel 13 in Belagblättchen bzw. Verbindungsblättchen geschnitten. Die geschnittenen Verbindungsblättchen werden jeweils an die Artikelgruppen bzw. Tabakstock-Filterstopfen-Tabakstock-Gruppen auf der Fördertrommel 22 übergeben bzw. angeheftet. In DE 39 18 137 C2 ist ausführlich ein Belagapparat beschrieben.

Nach dem Anheften der geschnittenen und der einzelnen Verbindungsblättchen an jeweils eine Artikelgruppe werden die Artikelgruppen weiter zu einer nachfolgenden Rolltrommel 26 und einer Rolleinrichtung 27 transportiert, mittels der die Verbindungsblättchen vollständig um die Tabakstock-Filterstopfen-Tabakstock-Gruppen herumgewickelt werden. Die Rolleinrichtung 27 besteht in einer Ausgestaltung aus einem Stegrad, einer Rollhand mit einer Rollfläche und ausgangsseitig einer Rollwalze, wobei die Rollfläche und die Rolltrommel 26 einen Rollkanal bilden, in dem Artikelgruppen mit den Verbindungsblättchen umwickelt werden, womit doppeltlange Filterzigaretten 84 gebildet werden.

Die doppeltlangen Filterzigaretten 84 werden nachfolgend an eine Fördertrommel 28 und weiter nachfolgend an eine weitere Fördertrommel 29 übergeben und für den weiteren Bearbeitungsprozess an einer Filteransetzmaschine bereitgestellt.

Von der Fördertrommel 29 werden die doppeltlangen Filterzigaretten 84 über eine Fördertrommel 30 zu einer Schneidtrommel 31 gefördert, an der ein Schneidmesser 32 angeordnet ist, welches aus den doppeltlangen Filterzigaretten durch einen mittigen Trennschnitt Filterzigaretten 52-52''' einfacher Gebrauchslänge herstellt.

Die Filterzigaretten 52, 52', 52", 52''' werden anschließend von der Schneidtrommel 31 an eine Spreiztrommel 33 übergeben. Auf der Spreiztrommel 33 werden die Filterzigarettenpaare längsaxial voneinander beabstandet und anschließend an eine erste Prüftrommel 34 übergeben. An der als Förderorgan ausgebildeten Prüftrommel 34 ist eine erste Bildaufnahmevorrichtung 44 angeordnet, welches die Filterzigaretten einer ersten Prüfung, z.B. einer Kopfendenprüfung oder Stirnseiten- oder Mantelflächenprüfung, unterzieht.

Im Rahmen der Erfindung ist es möglich, dass die hergestellten Filterzigaretten an einer ersten als Prüfeinrichtung ausgebildeten Bildaufnahmevorrichtung 44 einer optischen Prüfung unterzogen werden.

Anschließend werden die Zigaretten von der Prüftrommel 34 an eine nachfolgende zweite Prüftrommel 35 übergeben, an der eine zweite zu einer Prüfeinrichtung gehörende Bildaufnahmevorrichtung 45 angeordnet ist, um die Zigaretten weiteren Qualitätsprüfungen, insbesondere einer weiteren optischen Prüfung zu unterziehen.

Figur 1 zeigt noch an zwei weiteren Stellen erfindungsgemäße Bildaufnahmevorrichtungen. In der Trommelanordnung M, in der Filterstopfen in der Filteransetzmaschine verarbeitet werden und in Richtung der Trommelanordnung T für die Tabakstöcke zugeführt werden, ist eine erste Prüfeinrichtung umfassend eine erfindungsgemäße Bildaufnahmevorrichtung 43 vorgesehen, die beispielsweise die Enden eines vierfach langen Filterstabes 83 prüft. Es können beispielsweise die Stirnflächen bzw. Stirnseiten der Filterstäbe 83 hier geprüft werden. Die vierfach langen Filterstäbe 83 werden nach der Prüfung auf eine weitere Trommel übergeben, geschnitten, gestaffelt und anschließend fluchtend übergeben an eine weitere Trommel, bei der eine weitere Prüfeinrichtung vorgesehen ist, die eine erfindungsgemäße Bildaufnahmevorrichtung 42 aufweist, die wiederum beispielsweise die Enden insbesondere die Stirnflächen bzw. Stirnseiten der dort zweifach lang vorliegenden Filterstäbe 85 prüft. Die so geprüften Filterstäbe werden dann zwischen zwei Tabakstöcke auf die Trommel 21 gesetzt und wie üblich mit Belagpapier versehen und entsprechend geschnitten, so dass zwei Zigaretten entstehen, die entsprechend über die Prüfeinrichtungen umfassend die erfindungsgemäßen Bildaufnahmevorrichtungen 44 und 45 überprüft werden können.

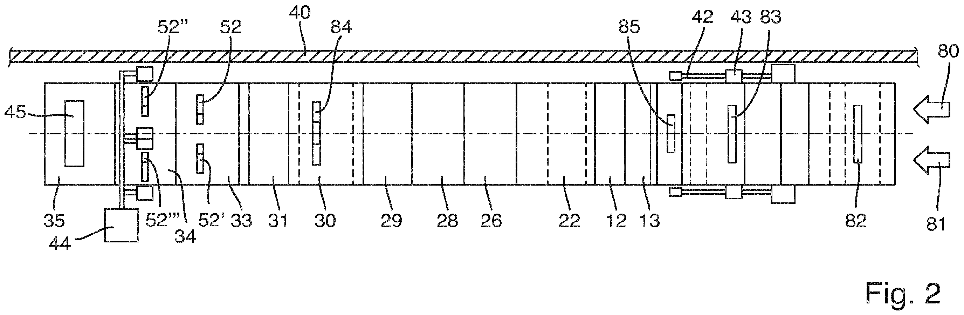

Figur 2 zeigt eine schematische Draufsicht auf die Maschine gemäß Figur 1, wobei allerdings einige der Trommeln weggelassen worden sind, um die Draufsicht nicht zu verkomplizieren. Es ist dort insbesondere die Bildaufnahmevorrichtung 42 umfassend beispielsweise, wie später dargestellt wird, zwei endseitige Prismen, über die reflektierend Bilder der Stirnseiten der mehrfach langen Filterstäbe aufgenommen werden, vorgesehen. Zudem ist der Strahlengang durch entsprechende Verkleidungen oder Rohre vor Verschmutzungen geschützt. An den Strahlengang schließt sich dann eine Kamera an, die auch hier nur sehr schematisch dargestellt ist. Die erfindungsgemäße Bildaufnahmevorrichtung 43 überdeckt teilweise die Bildaufnahmevorrichtung 42, die an einer stromabwärts liegenden Trommel angeordnet ist. Es ist zudem auch eine erfindungsgemäße Bildaufnahmevorrichtung 44 vorgesehen, die es ermöglicht, von zwei parallel laufenden Zigaretten die jeweiligen Stirnseiten, d.h. die auf der einen Seite jeweils die beiden Filterstirnseiten und auf der anderen Seite jeweils eine Tabakstockstirnseite, zu überprüfen bzw. von diesen Seiten Bilder aufzunehmen. Im Hinblick auf die Einzelheiten der erfindungsgemäßen Bildaufnahmevorrichtungen wird auf das Folgende verwiesen. Mittels der Bildaufnahmevorrichtung 45 kann beispielsweise das Umhüllungsmaterial der Zigaretten 52-52''' auf Fehler untersucht werden.

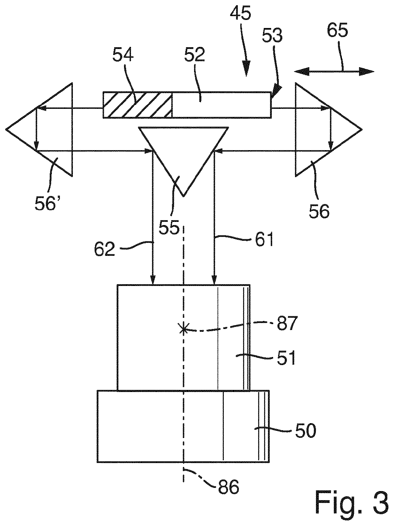

Figur 3 zeigt schematisch eine erfindungsgemäße Bildaufnahmevorrichtung. Es ist eine Kamera 50 mit einem Objektiv 51 vorgesehen. Im Rahmen der Erfindung kann die Kamera 50 auch das Objektiv 51 umfassen. Mittels der Kamera 50 werden gleichzeitig zwei Abbildungen aufgenommen bzw. aufgezeichnet. Es handelt sich um die Stirnflächen oder Stirnseiten einer Zigarette 52, nämlich die Stirnfläche oder die Stirnseite des Mundstückes, also eine Stirnfläche bzw. Stirnseite eines Filters 54, und das Kopfende 53 bzw. die Kopfseite des Tabakstocks. Die Zigarette 52 wird üblicherweise bei dem queraxialen Transport auf einer Trommel in einer Aufnahme geprüft. Mittels der erfindungsgemäßen Bildaufnahmevorrichtung 45 wird in diesem Ausführungsbeispiel gemäß Figur 3 durch entsprechende reflektierende Elemente 56, 56' und 55 die jeweilige Abbildung der Stirnseiten der Zigarette 52 mit einem ersten Strahlengang 61 und einem zweiten Strahlengang 62 zur Kamera geführt. Durch das Verwenden der reflektierenden optischen Vorrichtungen in Form von einem ersten Prisma 55 und zwei zweiten Prismen 56 und 56' ist eine sehr kompakt bauende Vorrichtung möglich. Insbesondere kann auch bei beengten Platzverhältnissen im Bereich der Zigarette, die zu vermessen ist, eine sehr gute Abbildung der Zigarette bzw. in diesem Fall der Stirnseiten oder Stirnflächen der Zigarette vorgesehen sein.

Der Strahlengang 61 verläuft von dem Kopfende 53 der Zigarette 52 über ein zweites Prisma 56, das in Längsachse der Zigarette, d.h. in Verschieberichtung 65, also quer zur Förderrichtung der Zigaretten, verschiebbar ist, zweimal reflektiert und über das erste Prisma 55 erneut reflektiert, um in Richtung des Objektivs 51 und der Kamera 50 gelenkt zu werden. Entsprechend ist ein Strahlengang 62 vorgesehen, der von der Stirnseite des Filters 54 zu einem zweiten Prisma 56' von dort zu dem ersten Prisma 55 jeweils reflektiert wird und zur Kamera 50 gelangt. So können beide Stirnflächen bzw. Stirnseiten der Zigarette 52 gleichzeitig mit der Kamera 50 aufgenommen werden.

Figur 3 zeigt noch die optische Achse 86 der Kamera 50 mit dem Objektiv 51. Das Objektiv 51 weist ein entsprechendes Linsensystem auf, das einen optischen Mittelpunkt 87 definiert. Von diesem optischen Mittelpunkt aus wird die Gegenstandsweite des Objektivs 51 definiert und auch die Brennweite. Das heißt, die Brennweite ist vorzugsweise von dem fotosensitiven Chip der Kamera bis zu dem optischen Mittelpunkt 87 und die Gegenstandsweite vom abzubildenden Gegenstand bzw. der reellen Abbildung zu dem optischen Mittelpunkt 87 zu verstehen.

Bei einem Formatwechsel der Zigarette, insbesondere wenn sich die Länge der Zigarette ändert, muss beispielsweise lediglich das zweite Prisma 56 verschoben werden, um unterschiedliche Längen auszugleichen, so dass die Gegenstandsweite, d.h. der optische Abstand der jeweiligen Stirnseite zu dem Objektiv 51 der Kamera 50 gleich ist. Auf diese Weise können auch bei einer geringen Schärfentiefe von 1 bis 2 mm beide Stirnseiten scharf abgebildet werden. In dem Ausführungsbeispiel der Figur 3 wird dafür gesorgt, dass der Filter 54 bzw. die Stirnseite des Filters 54 bei einem Formatwechsel immer an dem gleichen Ort liegt. Es kann allerdings auch sein, dass ein spiegelsymmetrischer Aufbau gewünscht ist, bei dem bei einer Vergrößerung der Zigarettenlänge sich die Stirnseite des Filters genauso weit nach links verschiebt wie die Kopfendenstirnseite 53 sich nach rechts verschiebt. Für diesen Fall sollte auch das zweite Prisma 56' in längsaxialer Richtung der Zigarette verschiebbar ausgestaltet sein, um die Scharfstellung der jeweiligen Stirnseite zu ermöglichen.

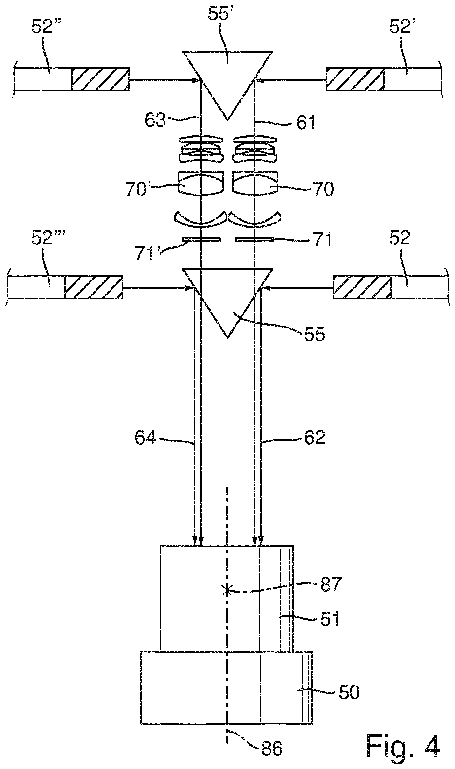

Figur 4 zeigt eine weitere nicht zur Erfindung gehörende Ausführungsform einer Bildaufnahmevorrichtung in schematischer Darstellung. Bei diesem Ausführungsbeispiel werden vier Abbildungen gleichzeitig von der Kamera 50 aufgenommen. Es sind jeweils Abbildungen der Stirnseiten der Filter von Filterzigaretten 52, 52', 52", 52''' aufzunehmen. Es sind zudem unterschiedlich lange Strahlengänge 61 bis 64 dargestellt. Hierbei ist die Weglänge der Strahlengänge 61 und 63 länger als die Weglänge der Strahlengänge 62 und 64.

Ohne die Weglängenanpassungsvorrichtung wäre eine Scharfstellung der jeweiligen Stirnseiten der Filter der Filterzigaretten 52 - 52''' bei gleichzeitiger Aufnahme nicht möglich. Aus diesem Grunde sind entsprechende Objektive 70 und 70' vorgesehen, die von den Stirnseiten der Filterzigaretten 52' und 52" eine Zwischenabbildung, und zwar eine reelle Zwischenabbildung, bei 71 und 71' erzeugen. Die Weglänge der Zwischenabbildungen 71 und 71' zur Kamera bzw. zum Objektiv 51 der Kamera 50 ist dann genauso lang wie die Weglänge des zweiten Strahlengangs 62 und des vierten Strahlengangs 64. Auf diese Weise können vier scharfe Abbildungen gleichzeitig auf der Kamera 50 abgebildet werden.

Von den Stirnseiten 52' und 52" laufen entsprechend Strahlen zu dem ersten Prisma 55' über die Objektive 70, 70', um entsprechend reelle Zwischenabbildungen 71, 71' auszubilden, und weiter oberhalb oder unterhalb des ersten Prismas 55 zur Kamera 50 mit dem Objektiv 51. Die Strahlen der Stirnseiten der Filterzigaretten 52 und 52''' laufen von den Stirnseiten zu dem ersten Prisma 55 und werden dort zu der Kamera 50 mit dem Objektiv 51 reflektiert.

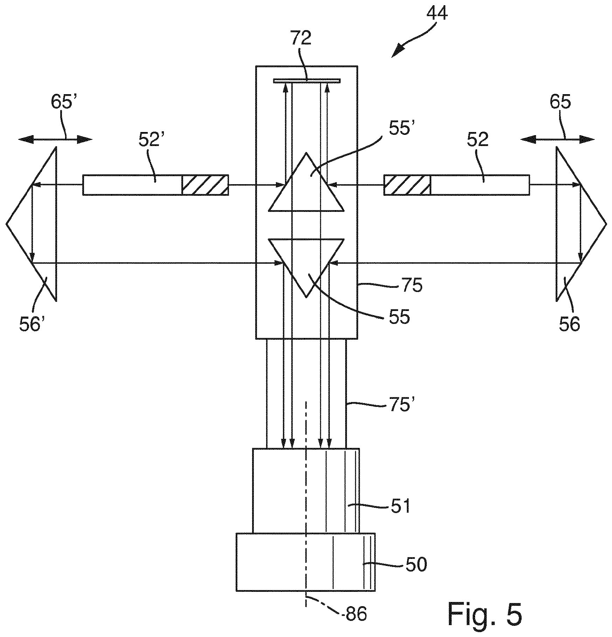

Figur 5 zeigt eine weitere Ausführungsform einer erfindungsgemäßen Bildaufnahmevorrichtung 44.

In dem Ausführungsbeispiel gemäß Figur 5 werden von zwei Zigaretten Abbildungen von den jeweils gegenüberliegenden Stirnseiten aufgenommen. Um eine jeweils scharfe Abbildung aller vier Stirnseiten zu ermöglichen, sind als Weglängenanpassungsvorrichtungen zweite Prismen 56 und 56' vorgesehen, die in Verschieberichtung 65 bzw. 65' verschiebbar sind. Die Verschieberichtung ist auch hier längsaxial mit den Längsachsen der Zigaretten 52 und 52'''. Um die lange Weglänge von den Kopfenden der Zigaretten zu kompensieren, werden zunächst die Strahlen von den Stirnseiten der Filter mit einem ersten Prisma 55' zu einer Spiegelvorrichtung 72 reflektiert und von dort Richtung Kamera 50 mit dem Objektiv 51 weiter reflektiert. Die Spiegelvorrichtung 72 ist hierbei so ausgestaltet, dass die von der Spiegelvorrichtung 72 zum Objektiv 51 der Kamera 50 reflektierten Strahlen oberhalb oder unterhalb der ersten Prismen 55 und 55' geführt werden. Zudem ist noch eine Verkapselung eines Teils des Strahlengangs in Form von Verkleidungen 75 und 75' schematisch angedeutet. Dies verhindert einen Einfluss von Verunreinigungen in der Luft auf die jeweiligen Abbildungen.

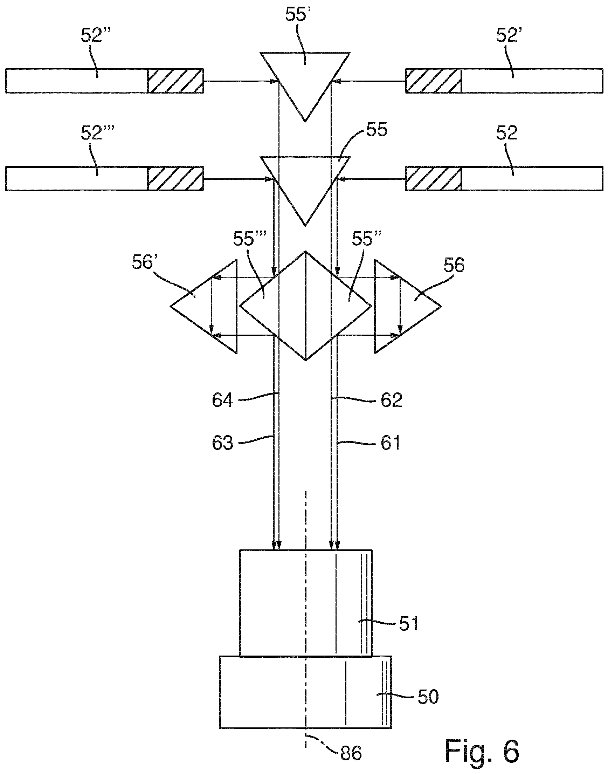

Figur 6 zeigt schematisch ein weiteres Ausführungsbeispiel einer erfindungsgemäßen Bildaufnahmevorrichtung. In diesem Fall werden nur die Stirnseiten der Filter der jeweiligen Zigaretten 52 bis 52''' aufgenommen. Um den größeren Abstand, d.h. die größere Gegenstandsweite der Stirnseiten der Filter der Filterzigaretten 52' und 52", zu kompensieren, werden die Strahlen, die von den Stirnseiten der Filter der Zigaretten 52 und 52''' kommen, in deren Strahlengang von der Weglänge her verlängert. Dies geschieht dadurch, dass diese nach einer ersten Reflektion an einem ersten Prisma 55 über eine weitere Reflektion an einem weiteren ersten Prisma 55" bzw. 55''' zu einem zweiten Prisma 56 bzw. 56' geführt werden und von dort nach entsprechenden Reflektionen zurück zum ersten Prisma 55" bzw. 55''' und von dort in Richtung des Objektivs 51 der Kamera 50 reflektiert werden. Die Abstände der Prismen 56 und 56' von dem Prisma 55" und 55''' sind hierbei vorzugsweise einstellbar. Diese können beispielsweise wieder senkrecht zur optischen Achse des Objektivs 51 verschoben werden oder entsprechend auch parallel zu den Längsachsen der Zigaretten 52 bis 52''' bzw. den Aufnahmemulden einer nicht dargestellten Transporttrommel bzw. Prüftrommel.

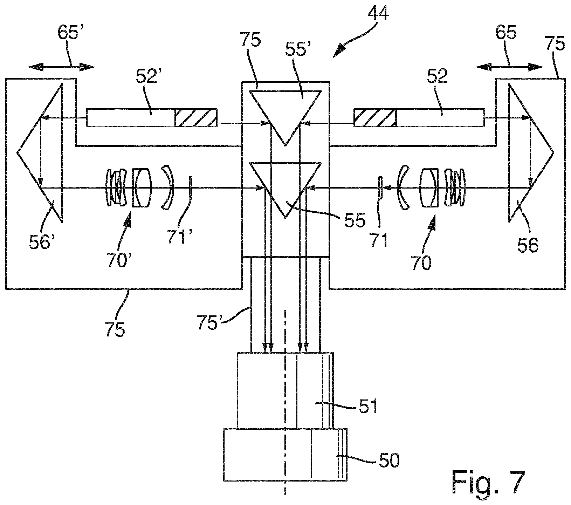

Figur 7 zeigt eine weitere Ausführungsform einer erfindungsgemäßen Bildaufnahmevorrichtung. Im Vergleich zu Figur 5 wird bei der Ausführungsform gemäß Figur 7 nicht die Gegenstandsweite der Abbildungen für die Stirnseiten der Filter der Zigaretten 52 und 52' über eine Spiegelvorrichtung 72 verlängert, sondern stattdessen die Gegenstandsweite der Stirnseiten der Kopfenden über Objektive 70 und 70' und erzeugte reelle Zwischenabbildungen 71 und 71' verkürzt auf die Gegenstandsweite der Abbildungen der Stirnseiten der Filter. Dies hat den Vorteil, dass weniger störende Partikel auf dem Weg bzw. in den Strahlengängen der erfindungsgemäßen Bildaufnahmevorrichtung vorliegen können, so dass aus diesem Grunde schon die Bildaufnahmen verbessert sind.

An Stelle der Aufnahmen von Filterzigaretten können auch andere stabförmige Artikel entsprechend aufgenommen werden, wie beispielsweise Filter oder Filtersegmente bzw. Tabakstöcke. Zudem können an Stelle der Aufnahmen der Stirnseiten bzw. Abbildungen der Stirnseiten auch andere Teile von Zigaretten oder andere stabförmige Artikel der Tabak verarbeitenden Industrie mit der erfindungsgemäßen Bildaufnahmevorrichtung aufgenommen werden.

Es können zudem weitere Verkleidungen bzw. Abschottungen von der Umgebung vorgenommen werden, um Fremdkörper in den Strahlengängen zu vermeiden. Bei den optischen Messungen, die zur Qualitätsüberwachung bei der Zigaretten- und Filterherstellung dienen, werden entsprechende Bilder von der Oberfläche oder von den Stirnflächen von Zigaretten oder Filtern von entsprechenden Kameras oder Kamerasystemen aufgenommen und in einer Auswerteeinheit analysiert. Es kann beispielsweise analysiert werden, ob die aufgenommenen Bilder mit Vorgaben übereinstimmen. Zudem können zeitlich hintereinander aufgenommene Bilder von den gleichen Objekten dazu dienen, Artefakte oder Verschmutzungen, die im optischen Weg auftreten, herauszurechnen.

Die optischen Systeme werden erfindungsgemäß an einer Produktionsmaschine der Tabak verarbeitenden Industrie eingesetzt, und zwar insbesondere auch dort, wo an sich nur wenig Platz ist. Hierzu werden entsprechende reflektierende optische Vorrichtungen verwendet, die kleinbauend sind und die Abbildungen von den engen Platzverhältnissen weg reflektieren in Richtung einer Kamera mit einem Objektiv.

Bei den optischen Messungen sollen Eigenschaften wie Verschmutzung oder partielle Zerstörung der Objekte festgestellt werden. Es können zudem auch genaue Längen- und Flächenmaße ermittelt werden.

Die erfindungsgemäße Bildaufnahmevorrichtung lässt sich modular und kostengünstig halten und an verschiedenen Messorten und verschiedenen Maschinentypen integrieren. Es ist zudem ein variabel oder flexibel gestaltbarer Strahlengang für die optische Inspektion möglich, um verschiedenen Fördertrommelanordnungen Rechnung zu tragen.

Durch die erfindungsgemäßen Weglängenanpassungsvorrichtungen in Form der einen oder mehreren zweiten reflektierenden optischen Vorrichtungen bzw. in Form eines Objektivs, mittels dessen eine reelle Zwischenabbildung möglich ist, kann auch ein Produktlängen unabhängiger Aufbau der Kamera mit dem Objektiv vorgesehen sein.

Zudem ist vorzugsweise ein bidirektionaler Strahlengang vorgesehen, um eine Möglichkeit einer integrierten Beleuchtung vorzusehen. Hierzu kann beispielsweise im Bereich der Kamera eine Beleuchtungsvorrichtung vorgesehen sein, die in Richtung der ersten reflektierenden optischen Vorrichtung Licht abstrahlt. Durch die Erfindung ist es auch möglich, die Anzahl der Kameras und der Objektive zu verringern. Dieses führt insbesondere auch dazu, dass weniger Industriecomputer benötigt werden, um eine Vielzahl von optischen Untersuchungen vornehmen zu können.

Die optischen Wege werden, nahezu vollständig, gekapselt beispielsweise durch Vorsehen von Rohren, um Luftverunreinigungen von den optischen Wegen fern zu halten. Es können auch luftdichte Rohre vorgesehen sein, die mit Überdruck beaufschlagt sind, um die Bilddegradation weiter zu verringern.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 1: Filteransetzmaschine
- 10: Belagapparat
- 11: Belagpapierstreifen
- 12: Saugwalze
- 13: Messerwalze
- 21: Zusammenstelltrommel
- 22: Fördertrommel
- 26: Rolltrommel
- 27: Rolleinrichtung
- 28: Trommel
- 29: Trommel
- 30: Fördertrommel
- 31: Schneidtrommel
- 32: Schneidmesser
- 33: Spreiztrommel
- 34: Prüftrommel
- 35: Trommel
- 40: Maschinenwand
- 42, 43, 44, 45: Bildaufnahmevorrichtung
- 50: Kamera
- 51: Objektiv
- 52, 52', 52", 52''': Zigarette
- 53: Kopfende
- 54: Filter
- 55, 55', 55", 55''': erste reflektierende optische Vorrichtung
- 56, 56': zweite reflektierende optische Vorrichtung
- 61: erster Strahlengang
- 62: zweiter Strahlengang
- 63: dritter Strahlengang
- 64: vierter Strahlengang
- 65, 65': Verschieberichtung
- 70, 70': abbildendes Linsensystem
- 71, 71': reelle Zwischenabbildung
- 72: Spiegelvorrichtung
- 75, 75': Verkleidung
- 80: hintere Bahn
- 81: vordere Bahn
- 82: Tabakstock doppelter Gebrauchslänge
- 83: Filterstab 4-facher Gebrauchslänge
- 84: doppeltlange Filterzigarette
- 85: Filterstab 2-facher Gebrauchslänge
- 86: optische Achse
- 87: optischer Mittelpunkt

- P: Zigarettenstrangmaschine
- T: Trommelanordnung
- M: Trommelanordnung

## Patentansprüche

1. Maschine der Tabak verarbeitenden Industrie mit wenigstens einer Bildaufnahmevorrichtung (42-45) zur optischen Prüfung von stabförmigen Artikeln (52-52‴) der Tabak verarbeitenden Industrie umfassend eine Kamera (50, 51), wobei die Kamera (50, 51) eingerichtet ist, wenigstens zwei Abbildungen jeweils wenigstens eines stabförmigen Artikels (52-52‴) oder jeweils wenigstens eine Abbildung von jeweils wenigstens zwei stabförmigen Artikeln (52-52‴) gleichzeitig aufzunehmen, wobei für jede Abbildung jeweils ein Strahlengang (61-64) von dem jeweiligen stabförmigen Artikel (52-52‴) zu der Kamera (50, 51) über wenigstens eine erste reflektierende optische Vorrichtung (55-55"', 72) vorgesehen ist, **dadurch gekennzeichnet, dass** jeder Strahlengang (61-64) eine Weglänge hat, wobei die Weglänge wenigstens eines ersten Strahlengangs (61, 63) durch eine Weglängenanpassungsvorrichtung (56, 56', 70, 70') an die Weglänge eines zweiten Strahlengangs (62, 64) angepasst werden kann, wobei durch die Weglängenanpassungsvorrichtung (56, 56', 70, 70') eine variable Einstellung der Weglängen bei unterschiedlich langen stabförmigen Artikeln ermöglicht ist.

2. Maschine nach Anspruch 1, **dadurch gekennzeichnet, dass** die Weglängenanpassungsvorrichtung (56, 56', 70, 70') derart eingerichtet ist, eine erste Gegenstandsweite des ersten Strahlengangs (61, 63) so groß einzustellen wie eine zweite Gegenstandsweite des zweiten Strahlengangs (62, 64).

3. Maschine nach Anspruch 1 oder 2, **dadurch gekennzeichnet, dass** die Weglängenanpassungsvorrichtung (56, 56') eine zweite reflektierende optische Vorrichtung (56, 56'), insbesondere ein Prisma und/oder eine Spiegelanordnung, umfasst, dessen Abstand zu dem stabförmigen Artikel (52-52‴), von dem über die zweite reflektierende optische Vorrichtung (56, 56') eine Abbildung aufgenommen wird, veränderbar ist.

4. Maschine nach einem der Ansprüche 1 bis 43, **dadurch gekennzeichnet, dass** zur Aufnahme von zwei Stirnseiten eines stabförmigen Artikels (52-52‴), insbesondere zu jeder Stirnseite gegenüberliegend, wenigstens eine erste oder eine zweite reflektierende optische Vorrichtung (55-55", 72, 56, 56'), insbesondere wenigstens ein Prisma und/oder eine Spiegelanordnung, vorgesehen ist, wobei insbesondere zur Anpassung an die Länge des stabförmigen Artikels (52-52‴) wenigstens eine der zweiten reflektierenden optischen Vorrichtungen (56, 56') quer zur optischen Achse der Kamera (50), insbesondere in Richtung einer Längsachse der stabförmigen Artikel (52-52‴), verschiebbar ist.

5. Maschine nach einem der Ansprüche 1 bis 4, **dadurch gekennzeichnet, dass** die wenigstens eine erste reflektierende optische Vorrichtung (55-55"', 72), insbesondere wenigstens ein Prisma und/oder eine Spiegelanordnung, Strahlen des ersten und des zweiten Strahlengangs (61-64) in Richtung der Kamera (50, 51) reflektiert, wobei die wenigstens eine erste reflektierende optische Vorrichtung (55-55‴, 72) insbesondere im Wesentlichen parallele Strahlen zur Kamera (50, 51) reflektiert.

6. Maschine nach einem der Ansprüche 1 bis 5, **dadurch gekennzeichnet, dass** im Wesentlichen ein rechter Winkel zwischen einem auf die erste oder zweite reflektierende optischen Vorrichtung (55-55"', 56, 56') einfallenden und einem von der ersten oder zweiten reflektierenden optischen Vorrichtung (55-55‴, 56, 56') reflektierten Strahl vorliegt, wobei insbesondere ein erster Teil einer ersten reflektierenden optischen Vorrichtung (55-55‴) oder einer zweiten reflektierenden optischen Vorrichtung (56, 56') verspiegelt ausgebildet ist und ein zweiter Teil der ersten reflektierenden optischen Vorrichtung (55-55‴) oder zweiten reflektierenden optischen Vorrichtung (56, 56') unverspiegelt ausgebildet ist.

7. Maschine nach einem der Ansprüche 1 bis 6, **dadurch gekennzeichnet, dass** wenigstens ein Teil der Komponenten (55-55‴, 72, 56, 56') der Bildaufnahmevorrichtung (42-45) und/oder wenigstens ein Teil der Strahlengänge (61-64) spiegelsymmetrisch zu einer optischen Achse der Kamera (50, 51) ist, wobei insbesondere die Strahlengänge (61-64) zumindest abschnittsweise, vorzugsweise nahezu vollständig, gekapselt sind, wobei die Strahlengänge (61-64) jeweils zwischen den optischen Vorrichtungen und dem Objektiv (51) der Kamera (50) insbesondere durch Rohre verlaufen.

8. Verfahren zum optischen Prüfen von stabförmigen Artikeln (52-52‴) der Tabak verarbeitenden Industrie, wobei mittels einer Kamera (50, 51) wenigstens zwei Abbildungen jeweils wenigstens eines stabförmigen Artikels (52-52‴) oder jeweils wenigstens zwei stabförmiger Artikel (52-52‴) gleichzeitig aufgenommen werden, wobei für jede Abbildung Strahlen über einen Strahlengang (61-64) von dem wenigstens einen stabförmigen Artikel (52-52‴) über eine erste reflektierende optische Vorrichtung (55-55‴) zur Kamera (50, 51) reflektiert werden, wobei die Strahlen eine Weglänge haben, wobei die Weglänge wenigstens eines ersten Strahlengangs (61, 63) durch eine Weglängenanpassungsvorrichtung (56, 56', 70, 70') an die Weglänge eines zweiten Strahlengangs (62, 64) angepasst wird, wobei durch die Weglängenanpassungsvorrichtung (56, 56', 70, 70') eine variable Einstellung der Weglängen bei unterschiedlich langen stabförmigen Artikeln ermöglicht ist.

9. Verfahren nach Anspruch 8, **dadurch gekennzeichnet, dass** die Weglängenanpassungsvorrichtung (56, 56', 70, 70') derart eingerichtet ist, eine erste Gegenstandsweite des ersten Strahlengangs (61, 63) so groß einzustellen wie eine zweite Gegenstandsweite des zweiten Strahlengangs (62, 64).

10. Verfahren nach Anspruch 8 oder 9, **dadurch gekennzeichnet, dass** die Weglängenanpassungsvorrichtung (56, 56', 70, 70') eine zweite reflektierende optische Vorrichtung (56, 56') , insbesondere ein Prisma oder eine Spiegelanordnung, umfasst, dessen Abstand zu dem stabförmigen Artikel (52-52‴), von dem über die zweite reflektierende optische Vorrichtung (56, 56') eine Abbildung aufgenommen wird, veränderbar ist.

11. Verfahren nach einem der Ansprüche 8 bis 11, **dadurch gekennzeichnet, dass** zwei Stirnseiten eines stabförmigen Artikels (52-52‴) aufgenommen werden und dass insbesondere zur Anpassung an die Länge des stabförmigen Artikels (52-52‴) wenigstens eine der zweiten reflektierenden optischen Vorrichtungen (56, 56') in Richtung einer Längsachse einer Mulde zur Aufnahme eines stabförmigen Artikels (52-52‴) verschoben wird.

12. Verfahren nach einem der Ansprüche 8 bis 11, **dadurch gekennzeichnet, dass** die wenigstens eine erste reflektierende optische Vorrichtung (55-55‴), insbesondere wenigstens ein Prisma oder eine Spiegelanordnung, Strahlen des ersten und des zweiten Strahlengangs (61-64) in Richtung der Kamera (50, 51) reflektiert, wobei die wenigstens eine erste reflektierende optische Vorrichtung (55-55‴) insbesondere im Wesentlichen parallele Strahlen zur Kamera reflektiert.

## Claims

1. Machine of the tobacco processing industry having at least one image recording device (42-45) for optical inspection of rod-shaped articles (52-52‴) from the tobacco processing industry, comprising a camera (50, 51), wherein the camera (50, 51) is configured to record at least two images respectively of at least one rod-shaped article (52-52‴) or respectively at least one image of respectively at least two rod-shaped articles (52-52‴) simultaneously, wherein for each image, respectively one ray path (61-64) from each rod-shaped article (52-52‴) to the camera (50, 51) via at least one first reflective optical device (55-55‴, 72) is provided, **characterised in that** each ray path (61-64) has a path length wherein the path length of at least one first ray path (61, 63) can be adapted by means of a path length adapting device (56, 56', 70, 70') to the path length of a second ray path (62, 64), wherein the path length adapting device (56, 56', 70, 70') enables a variable adjustment of the path lengths in case of rod-shaped articles with different lengths.

2. Machine according to claim 1, **characterised in that** the path length adapting device (56, 56', 70, 70') is configured to set a first object distance of the first ray path (61, 63) as large as a second object distance of the second ray path (62, 64).

3. Machine according to claim 1 or 2, **characterised in that** the path length adapting device (56, 56') comprises a second reflective optical device (56, 56'), in particular a prism and/or a mirror arrangement, the spacing of which from the rod-shaped article (52-52‴) of which rod-shaped article an image will be or is recorded via the second reflective optical device (56, 56'), is changeable.

4. Machine according to one of the claims 1 to 3, **characterised in that** for recording two end sides of a rod-shaped article (52-52‴), in particular opposing each end side, at least one first or one second reflective optical device (55-55", 72, 56, 56'), in particular at least one prism and/or one mirror arrangement, is provided, wherein in particular, for adapting to the length of the rod-shaped article (52-52‴) at least one of the second reflective optical devices (56, 56') is displaceable transversely to the optical axis of the camera (50), in particular in the direction of a longitudinal axis of the rod-shaped articles (52-52‴).

5. Machine according to one of the claims 1 to 4, **characterised in that** the at least one first reflective optical device (55-55‴, 72), in particular at least one prism and/or one mirror arrangement, reflects rays of the first and second ray path (61-64) in the direction of the camera (50, 51), wherein the at least one first reflective optical device (55-55‴, 72) reflects, in particular substantially parallel, rays toward the camera (50, 51).

6. Machine according to one of the claims 1 to 5, **characterised in that** substantially a right angle exists between a ray incident upon the first or second reflective optical device (55-55‴, 56, 56') and a ray reflected by the first or second reflective optical device (55-55‴, 56, 56'), wherein in particular, a first part of a first reflective optical device (55-55‴) or of a second reflective optical device (56-56') is configured mirrored and a second part of the first reflective optical device (55-55‴) or of a second reflective optical device (56, 56') is configured unmirrored.

7. Machine according to one of the claims 1 to 6, **characterised in that** at least a part of the components (55-55‴, 72, 56, 56') of the image recording device (42-45) and/or at least a part of the ray paths (61-64) is mirror-symmetrical to an optical axis of the camera (50, 51), wherein in particular the ray paths (61-64) are at least partially, preferably almost completely, encapsulated, wherein the ray paths (61-64) in each case extend between the optical devices and the objective (51) of the camera (50), in particular, through tubes.

8. Method for optical inspection of rod-shaped articles (52-52‴) from the tobacco processing industry, wherein by means of a camera (50, 51), at least two images respectively of at least one rod-shaped article (52-52‴) or respectively of at least two rod-shaped articles (52-52‴) are recorded simultaneously, wherein for each image, rays are reflected via one ray path (61-64) from the at least one rod-shaped article (52-52‴) by means of a first reflective optical device (55-55‴) to the camera (50, 51), wherein the rays have a path length, wherein the path length of at least one first ray path (61, 63) will be adapted by means of a path length adapting device (56, 56', 70, 70') to the path length of a second ray path (62, 64), wherein the path length adapting device (56, 56', 70, 70') enables a variable adjustment of the path lengths in case of rod-shaped articles with different lengths.

9. Method according to claim 8, **characterised in that** the path length adapting device (56, 56', 70, 70') is configured so that a first object distance of the first ray path (61, 63) is to be set as large as a second object distance of the second ray path (62, 64).

10. Method according to claim 8 or 9, **characterised in that** the path length adapting device (56, 56', 70, 70') comprises a second reflective optical device (56, 56'), in particular a prism or a mirror arrangement, the spacing of which from the rod-shaped article (52-52‴) of which an image will be or is recorded via the second reflective optical device (56, 56'), is changeable.

11. Method according to one of the claims 8 to 10, **characterised in that** two end sides of a rod-shaped article (52-52‴) are recorded and **in that**, in particular, for adapting to the length of the rod-shaped article (52-52‴) at least one of the second reflective optical devices (56, 56') is displaced in the direction of a longitudinal axis of a trough for accommodating a rod-shaped article (52-52‴).

12. Method according to one of the claims 8 to 11, **characterised in that** the at least one reflective optical device (55-55‴), in particular at least one prism or a mirror arrangement, reflects rays of the first and of the second ray path (61-64) in the direction toward the camera (50, 51), wherein the at least one first reflective optical device (55-55‴) reflects, in particular, substantially parallel rays toward the camera.

## Revendications

1. Machine de l'industrie de transformation du tabac avec au moins un dispositif de capture d'images (42-45) pour le contrôle optique d'articles en forme de tige (52-52"') de l'industrie de transformation du tabac, comprenant une caméra (50, 51), la caméra (50, 51) étant configurée pour capturer simultanément au moins deux images d'au moins respectivement un article en forme de tige (52-52"') ou respectivement au moins une image d'au moins respectivement deux articles en forme de tiges (52-52"'), un trajet optique (61-64) de chaque article en forme de tige (52-52"') à la caméra étant respectivement prévu pour chaque image via au moins un dispositif optique réfléchissant (55-55"', 72), **caractérisée en ce que** chaque trajet optique (61-64) a une longueur de trajet, la longueur d'au moins un premier trajet optique (61, 63) pouvant être adaptée, par un dispositif d'adaptation de longueur de trajet optique (56, 56', 70, 70'), à la longueur d'un second trajet optique (62, 64), le dispositif d'adaptation de longueur de trajet optique (56, 56', 70, 70') permettant un réglage variable des longueurs de trajet pour des articles en forme de tige de différentes longueurs.

2. Machine selon la revendication 1, **caractérisée en ce que** le dispositif d'adaptation de longueur de trajet optique (56, 56', 70, 70') est conçu de façon à régler une première distance à l'objet du premier trajet optique (61, 63) à la même valeur qu'une seconde distance à l'objet du second trajet optique (62, 64).

3. Machine selon la revendication 1 ou 2, **caractérisée en ce que** le dispositif d'adaptation de la longueur du trajet (56, 56') comprend un second dispositif optique réfléchissant (56, 56'), en particulier un prisme et/ou un agencement de miroirs, dont la distance par rapport à l'article en forme de tige (52-52"') dont une image est capturée via le second dispositif optique réfléchissant (56, 56") , est variable.

4. Machine selon l'une des revendications 1 à 3, **caractérisée en ce qu'**est prévu, notamment situé en regard de chaque face avant, pour capturer deux faces avant d'un article en forme de tige (52-52"'), au moins un premier ou un second dispositif optique réfléchissant (55-55", 72, 56, 56'), en particulier au moins un prisme et/ou un agencement de miroirs, au moins l'un des seconds dispositifs optiques réfléchissants (56, 56') étant déplaçable transversalement à l'axe optique de la caméra (50), notamment en direction d'un axe longitudinal des articles en forme de tiges (52-52"'), en particulier pour adaptation à la longueur de l'article en forme de tige (52-52‴).

5. Machine selon l'une des revendications 1 à 4, **caractérisée en ce que** le au moins un premier dispositif optique réfléchissant (55-55"', 72), en particulier au moins un prisme et/ou un agencement de miroirs, reflète des rayons des premier et deuxième trajets optiques (61-64) en direction de la caméra (50, 51), le au moins un premier dispositif optique réfléchissant (55-55‴, 72) reflétant vers la caméra (50, 51) notamment des rayons sensiblement parallèles.

6. Machine selon l'une des revendications 1 à 5, **caractérisée en ce qu'**il existe un angle sensiblement droit entre un rayon incident sur le premier ou le second dispositif optique réfléchissant (55-55"', 56, 56') et un rayon réfléchi par le premier ou le second dispositif optique réfléchissant (55-55"', 56, 56'), notamment une première partie d'un premier dispositif optique réfléchissant (55-55‴, 56, 56') ou d'un second dispositif optique réfléchissant (56, 56') étant réalisée de façon à être spéculaire et une seconde partie du premier dispositif optique réfléchissant (55-55"', 56, 56') ou du second dispositif optique réfléchissant (56, 56') étant réalisée de façon à être non spéculaire.

7. Machine selon l'une des revendications 1 à 6, **caractérisée en ce qu'**au moins une partie des composants (55-55‴, 72, 56, 56') du dispositif de capture d'images (42-45) et/ou au moins une partie des trajets optiques (61-64) est en symétrie miroir par rapport à un axe optique de la caméra (50, 51), en particulier les trajets optiques (61-64) sont encapsulés, au moins en partie, de préférence presque entièrement, les trajets optiques (61-64) s'étendant respectivement entre les dispositifs optiques et l'objectif (51) de la caméra (50), en particulier à travers des tubes.

8. Procédé de contrôle optique d'articles en forme de tiges (52-52‴) de l'industrie de transformation du tabac, dans lequel au moins deux images d'au moins respectivement un article en forme de tige (52-52"') ou d'au moins respectivement deux articles en forme de tiges (52-52"') sont capturées simultanément au moyen d'une caméra (50, 51), des rayons étant réfléchis pour chaque image via un trajet optique du au moins un article en forme de tige à la caméra (50, 51) par l'intermédiaire d'un premier dispositif optique réfléchissant (55-55"'), les rayons ayant une longueur de trajet optique, la longueur d'au moins un premier trajet optique (61, 63) étant adaptée par un dispositif d'adaptation de longueur de trajet optique (56, 56' ; 70, 70') à la longueur d'un second trajet optique (62, 64), le dispositif d'adaptation de longueur de trajet optique (56, 56', 70, 70') permettant un réglage variable des longueurs de trajet pour des articles en forme de tige de différentes longueurs.

9. Procédé selon la revendication 8, **caractérisé en ce que** le dispositif d'adaptation de longueur de trajet optique (56, 56' ; 70, 70') est configuré pour régler une première distance à l'objet du premier trajet optique (61, 63) à la même valeur qu'une seconde distance à l'objet du second trajet optique (62, 64).

10. Procédé selon la revendication 8 ou la revendication 9, **caractérisé en ce que** le dispositif d'adaptation de longueur de trajet optique (56, 56' ; 70, 70') comprend un second dispositif optique réfléchissant (56, 56'), en particulier un prisme ou un agencement de miroirs, dont la distance par rapport à l'article en forme de tige (52-52"'), dont une image est capturée via le second dispositif optique réfléchissant (56, 56'), est variable.

11. Procédé selon l'une des revendications 8 à 11, **caractérisé en ce que** deux faces avant d'un article en forme de tige (52-52"') sont capturées et que, notamment pour adaptation à la longueur de l'article en forme de tige (52-52"'), au moins l'un des seconds dispositifs optiques réfléchissants (56, 56') est déplacé dans la direction d'un axe longitudinal d'une auge de réception d'un article en forme de tige (52-52"').

12. Procédé selon l'une des revendications 8 à 11, **caractérisé en ce que** le au moins un premier dispositif optique réfléchissant (55-55"'), en particulier au moins un prisme ou un agencement de miroirs, reflète des rayons du premier et du second trajet optique (61-64) en direction de la caméra (50, 51), le au moins un premier dispositif optique réfléchissant (55-55"') reflétant vers la caméra notamment des rayons sensiblement parallèles.
